Europäisches Patentamt

European Patent Office

Office européen des brevets

(11) Numéro de publication : **0 041 090**
**B1**

(12) **FASCICULE DE BREVET EUROPÉEN**

(45) Date de publication du fascicule du brevet :
20.02.85

(51) Int. Cl.⁴ : **C 03 C 27/12, B 32 B 17/10**

(21) Numéro de dépôt : **80400716.9**

(22) Date de dépôt : **22.05.80**

(54) **Ecran transparent anti-balles et anti-explosions.**

(43) Date de publication de la demande :
**09.12.81 Bulletin 81/49**

(45) Mention de la délivrance du brevet :
**20.02.85 Bulletin 85/08**

(84) Etats contractants désignés :
**AT BE CH DE GB IT LI LU NL SE**

(56) Documents cités :
**FR-A- 2 102 239**
**FR-A- 2 307 772**
**FR-A- 2 322 106**
**GB-A- 1 315 489**
**GB-A- 2 032 844**

(73) Titulaire : **SOLAR CONTROL FRANCE Société à responsabilité limitée dite:**
**24, Rue Louis Blanc**
**F-75010 Paris (FR)**

(72) Inventeur : **Anastasie, Maurice Gustave Eugène**
**4, Rue Changarnier**
**F-75012 Paris (FR)**

(74) Mandataire : **Vander-Heym, Roger et al**
**172 Boulevard Voltaire**
**F-75011 Paris (FR)**

Jouve, 18, rue St-Denis, 75001 Paris, France

## Description

La présente invention est relative à un écran transparent anti-balles et anti-explosions destiné plus particulièrement mais non exclusivement à la protection des guichets par lesquels s'effectuent des transferts d'argent.

Ces guichets sont particulièrement visés par les voleurs qui n'hésitent plus à tirer sur le personnel qu'il convient donc de protéger.

Les agresseurs utilisent en général des armes de chasse, dont le canon est scié, pouvant tirer des balles Blondeau, Brenneke ou Prévost qui sont en vente libre.

En l'état actuel de la technique on réalise des écrans de protection comportant un verre feuilleté dont l'épaisseur doit être de l'ordre de quarante millimètres pour arrêter les balles Blondeau et Brenneke.

Les écrans de protection réalisés à l'aide de verre feuilleté sont très lourds et les guichets qui les utilisent pèsent, au mètre carré, environ le double de la charge pour laquelle les planchers qui les reçoivent ont été conçus.

De ce fait, il est nécessaire de renforcer les planchers ce qui augmente d'autant le coût de l'installation.

Le but de la présente invention est l'obtention d'un écran pare-balles relativement mince pouvant arrêter les balles précipitées et surtout les balles prévost constituées par des billes d'acier ainsi que les balles perforantes de 7,62 pour fusil de guerre Nato.

Le document FR-A 2 307 772 décrit des vitrages à l'épreuve des balles constitués notamment par l'association de plaques de verre et d'une plaque de polycarbonate.

Des vitrages composites utilisables comme écran résistant aux balles sont aussi connus du document GB-A-1 315 489. Ils comprennent un film de matière plastique transparente, en particulier un film de polyester tel que le téréphtalate de polyéthylène, interposé entre deux plaques de verre et lié à celles-ci par un adhésif. L'une des plaques de verre peut être remplacée par une plaque en matière plastique rigide transparente telle qu'une résine acrylique, un chlorure de polyvinyle rigide ou un polycarbonate.

L'écran de l'invention est constitué par l'association d'un verre feuilleté et d'une plaque rigide en matière plastique réunis par une feuille de polyester comportant un adhésif sur chacune de ses faces et est caractérisé en ce que ladite plaque est une plaque de polycarbonate et l'adhésif contient un produit anti-ultraviolet.

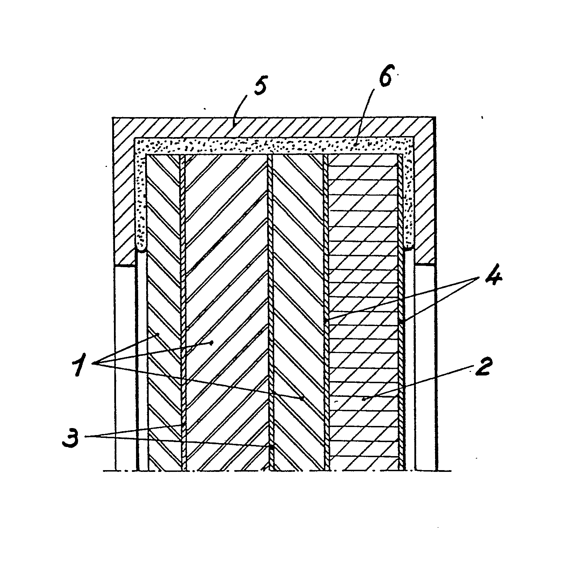

L'invention sera mieux comprise par la description qui va suivre faite en se référant au dessin annexé à titre d'exemple indicatif seulement sur lequel la figure unique est une vue partielle, à grande échelle et en coupe d'un écran conforme à l'invention.

En se reportant au dessin, on voit que l'écran est constitué principalement au moyen de plaques de verre 1 et d'au moins une plaque de matière plastique transparente 2 telle que de polycarbonate.

Entre les plaques 1 sont interposées des feuilles 3 de butyral et l'ensemble est collé à chaud et sous vide de façon à réaliser un verre feuilleté.

La plaque de polycarbonate 2 est disposée entre deux feuilles 4 en polyester transparent et muni d'un produit anti-ultraviolet. La feuille 4 externe a surtout pour but de protéger le polycarbonate qui est très sensible à l'abrasion.

Les deux « sandwichs » ci-dessus sont maintenus accolés à l'aide d'une armature rigide 5, métallique par exemple et d'un joint 6 périphérique réalisé à partir d'un mastic à base de silicones.

Selon un mode de réalisation, l'armature est constituée par quatre baguettes ayant une section en U dont les extrémités sont tronçonnées à 45° pour s'ajuster sur celles des baguettes adjacentes.

Selon une variante, la feuille de polyester externe 4 présente un adhésif sur l'une de ses faces pour permettre la fixation de la feuille sur le polycarbonate. La matière adhésive renferme un produit anti-ultraviolet.

La feuille de polyester située entre le verre feuilleté et le polycarbonate présente une couche adhésive contenant un produit anti-ultraviolet sur chacune de ses faces.

Hormis l'armature, les composants de l'écran doivent être transparents mais certains d'entre eux peuvent être teintés ou semi-réfléchissants.

Il est naturellement possible de réaliser des écrans avec des verres feuilletés différents pouvant comporter plusieurs verres feuilletés ou plusieurs plaques de polycarbonate ou analogue, étant fait observé que la face de l'écran située vers la personne à protéger sera toujours constituée par une feuille en polyester.

Il est possible aussi d'utiliser des feuilles en polyester constituées par l'association par collage, de deux films polyester ou d'un film en polyester et d'un film en une autre matière plastique transparente.

## Revendications

1. Ecran transparent anti-balles et anti-explosion constitué par l'association d'un verre feuilleté et d'une plaque rigide en matière plastique réunis par une feuille de polyester comportant un adhésif sur chacune de ses faces, caractérisé en ce que ladite plaque est une plaque de polycarbonate et l'adhésif contient un produit anti-ultraviolet.

2. Ecran selon la revendication 1, caractérisé en ce que la plaque de polycarbonate est recouverte extérieurement d'une feuille de polyester au moyen d'un adhésif renfermant un produit anti-ultraviolet.

**Claims**

1. Transparent anti-bullet and anti-explosion screen constituted by the association of a compound glass and a rigid plate in plastic material brought together by a polyester sheet including an adhesive on both of its sides, characterized by the fact that the said plate is a polycarbonate plate and the adhesive contains an anti-ultraviolet product.

2. Screen according to claim 1, characterized by the fact that the polycarbonate plate is covered on the outside by a polyester sheet by means of an adhesive containing an anti-ultraviolet product.

**Ansprüche**

1. Der durchsichtige kugel- und explosionsfester Schirm, bestehend aus einem Verbundglas und einer festen Platte aus Plastik, die durch eine Polyesterfolie, die beidseitig mit einem Klebstoff versehen ist, verbunden sind, ist dadurch gekennzeichnet, daß diese Platte aus Polykarbonat besteht und der Klebstoff ein UVabweisendes Produkt enthält.

2. Der Schirm gemäß Anspruch 1 ist dadurch gekennzeichnet, daß die Platte aus Polykarbonat außen mit einer Polyesterfolie überzogen ist, die mit einem Klebstoff aufgeklebt ist, der ein UV-abweisendes Produkt enthält.